# EUROPÄISCHE PATENTANMELDUNG

(11) **EP 2 608 132 A1**
(43) Veröffentlichungstag der Anmeldung: **26.06.2013**
(21) Anmeldenummer: 11195659.5
(22) Anmeldetag: 23.12.2011
(51) Int. Cl.: G06Q 10/10, G06Q 30/02

(54) **Verfahren der Verknüpfung von Endgeräten in einem Netzwerk**

(71) Anmelder: BLIPhead GmbH, 80538 München (DE)
(72) Erfinder: Mühlberger, Michael, 80538 München (DE)
(74) Vertreter: Meissner, Bolte & Partner

(57) **Zusammenfassung**

Die Erfindung betrifft ein Verfahren zum Herstellen einer Verknüpfung zwischen zwei Endgeräten (2, 3) in einem Netzwerk (1). Daten werden in eine erste (A2) und in eine zweite (B2) Datenstruktur eingelesen, die jeweils den Endgeräten (2, 3) zugeordnet sind. Beide Datenstrukturen (A2, B2) umfassen je eine Angabe eines geographischen Standorts, eine Zeitangabe und weitere Daten, die innerhalb eines vorgegebenen Zeitraums eingegeben wurden. Ein Netzwerkserver stellt fest, dass die Datenstrukturen (A2, B2) ausreichend aufeinander abgestimmt sind, und stellt eine Verknüpfung zwischen den Endgeräten (2, 3) her.

## Beschreibung

Die vorliegende Erfindung betrifft ein Verfahren zum Herstellen einer Verknüpfung zwischen zwei Endgeräten in einem Netzwerk. Sie betrifft weiterhin ein Computerprogramm zur Durchführung eines solchen Verfahrens auf einem oder mehreren Computern sowie ein oder mehrere computerlesbare Medien mit Instruktionen, die, wenn sie auf einem Computer ausgeführt werden, das genannte Verfahren implementierten.

### Stand der Technik

Bekannte Netzwerke, wie sie beispielsweise unter www.match.com oder www.friendscout24.com abzurufen sind, geben Anwendern die Möglichkeit, Filter und Findungskriterien individuell zu konfigurieren, um damit aus einer Vielzahl anderer Nutzer solche mit passendem Profil auswählen und dann ggf. kontaktieren zu können. Die Kontaktaufnahme wird mit diesem technischen Hilfsmittel sowohl im Hinblick auf die Auswahl des jeweils anderen als auch in Bezug auf möglicherweise vorhandene persönliche Hürden bei der Kontaktinitiative erleichtert.

Den bekannten Systemen zufolge wird ein von einem Anwender angegebenes Profil jedem weiteren Nutzer freigegeben, der zu entsprechenden Filterkriterien des Anwenders passt, wie beispielsweise in Bezug auf Familienstand, Geschlecht, Alter oder den jeweils aktuellen Standort. Automatische Abgleichprozesse übernehmen es dabei, unter den weiteren Nutzer einen oder mehrere geeignete auszuwählen. Mit Hilfe von elektronischen Nachrichten kann die Konversation dann erfolgen, ohne dass die Anwender sich je direkt gegenübergetreten sind.

Beispielsweise offenbart die Patentanmeldung WO 2011/081777 eine ad-hoc-Vernetzung von mobilen Geräten auf Grundlage von Ortsangaben und automatisch erzeugten Gebrauchsdaten der Geräte. Gemäß der Patentanmeldung US 2005/0038876 können Nutzer Profile erstellen, die in einer Serverdatenbank gespeichert werden und Charakteristika der Nutzer wie auch Angaben über Kriterien und deren Gewichtung für gewünschte Kontaktpersonen enthalten.

Bei dem Dating Netzwerk MissedConnections.com hat man die Möglichkeit, eine virtuelle Nachricht online zu hinterlassen, zusammen mit der Zeit- und Ortsinformation. Über die Wahl des gesuchten Geschlechts, Zeit und Ort kann man so eine Liste alle Flirtnachrichten in Listendarstellung erhalten.

Flirtticker ist eine Anwendung für internetfähige mobile Telefone (sog. Smartphones). Durch das Auslösen des Flirtickers auf einer grafischen Oberfläche hinterlässt man sein Profil im sog. Flirtticker, der dann all die Flirts der User im Listenformat nach Stadt, Tag, Geschlecht und Altersgruppe darstellt. Im Gegensatz zu MissedConnections.com kann man allerdings keine Nachricht zum Flirt hinterlassen. Die Suche des richtigen Flirts ist somit bei beiden Portalen dem User selbst überlassen, ohne weitere Hilfestellungen durch die Anwendungen.

In der modernen Zeit verfügen viele Menschen über diverse Profile in sozialen Netzwerken. Die allgemeine Aktivität in solchen Netzwerken ist jedoch seit 2010 zurückgegangen. Eine Desillusionierung über automatisch ausgewählte Kontakte, eine Überflutung mit unerwünschten elektronischen Nachrichten (Spam) und ein gewachsenes Bewusstsein für Datenschutz bewegen Anwender seitdem zu mehr Vorsicht bei der Preisgabe persönlicher Profile oder Kontaktdaten an Unbekannte.

Auch ist die Glaubwürdigkeit der im Stand der Technik verwendeten Profile in Frage zu stellen: Ein nicht wahrheitsgemäß angegebenes eigenes Profil erlaubt es einem unehrlichen Nutzer vorzugeben, die Filterkriterien anderer Anwender zu erfüllen. So erhält der unehrliche Nutzer Zugriff auf Daten der anderen Anwender, obwohl er nicht in deren Zielgruppe fällt.

Beispielsweise im Bereich des Jugendschutzes ist dieser Mangel an Datensicherheit ein relevantes Problem.

Es ist daher wünschenswert, ein technisches Verfahren zur Herstellung einer Verknüpfung von Endgeräten bereitzustellen, das insbesondere geeignet ist, die Kontaktaufnahme zwischen einander unbekannten Menschen nach einer persönlichen Begegnung zu erleichtern und das dabei erhöhten Sicherheitsanforderungen genügt.

### Offenbarung der Erfindung

Die genannte Aufgabe wird durch ein Verfahren, ein Computerprogramm und ein computerlesbares Medium bzw. mehrere computerlesbaren Medien gemäß den unabhängigen Ansprüchen gelöst. Bevorzugte Ausführungsformen werden in den Unteransprüchen und der nachfolgenden Beschreibung offenbart.

### Vorteile der Erfindung

Im Folgenden wird das erfindungsgemäße Verfahren anhand seiner Anwendung im Bereich der Kontaktaufnahme einander unbekannter Nutzer eines Netzwerkes nach einer persönlichen Begegnung erläutert. Diese Anwendung dient lediglich der Illustration der Erfindung und soll in keiner Weise beschränkend verstanden werden. Anwendungen in den Bereichen der Automobiltechnik, Sicherheitstechnik, Luft- und Raumfahrttechnik und andere mehr sind allgemein denkbar.

Beispiele für Netzwerke, in denen das Verfahren Anwendung finden kann, sind verdrahtete oder drahtlose Computernetze oder Netze für internetfähige mobile Telefone. Die Schnittstellen des Netzwerkes mit den Nutzern bilden Endgeräte, wie geeignete mobile oder feste Telefone, Smartphones, Tablet PCs, Computer, Laptops oder dergleichen.

Das Verfahren umfasst ein Einlesen von ersten und zweiten Daten in je eine Datenstruktur. Beispiele für eine solche Datenstruktur sind eine Matrix, ein Array, eine Liste oder ein sonstiges Objekt, das geeignet ist, Daten zu speichern, und das den Zugriff auf diese Daten ermöglicht.

Die ersten und zweiten Daten enthalten je eine Angabe eines geographischen Standortes und eine Zeitangabe.

Jeder der beiden geographischen Standorte kann einen Standort eines zugehörigen Endgeräts repräsentieren, der dann automatisch mit Hilfe eines Navigationssatellitensystems, GSM Zellinformation oder eines anderen Ortungssystems, erfasst werden kann. Alternativ kann mindestens einer der Standorte auf Angaben des jeweiligen Anwenders des Endgeräts beruhen. Auf diese Weise kann ein Anwender beispielsweise einen Ort angeben, an dem eine Begegnung mit einer Person stattgefunden hat, mit der der Anwender Kontakt aufnehmen möchte.

Ebenso kann mindestens eine der Zeitangaben automatisch von einem Endgerät erfasst werden.

Beispielsweise kann ein Anwender bei oder kurz nach einer relevanten Begegnung durch Bestätigen einer entsprechenden Abfrage (z.B. in einer graphischen Nutzeroberfläche) bewirken, dass das Einlesen der ersten bzw. zweiten Daten in die jeweilige Datenstruktur automatisch erfolgt, wobei die Standort- sowie die Zeitangabe dem aktuellen (automatisch erfassten) Standort des Endgeräts und der aktuellen Zeit entsprechen.

Alternativ kann der Anwender einen Ort und eine Zeit einer Begegnung im Nachhinein angeben und so das Einlesen in die betreffende (erste oder zweite) Datenstruktur bewirken. Ebenso können die ersten und/oder zweiten Daten einer eingelesenen ersten bzw. zweiten Datenstruktur manuell korrigiert werden. In beiden Fällen kann dem jeweiligen Nutzer für die Angabe des ersten (zweiten) Standorts ein Stadtplan oder eine Landkarte auf einem Anzeigefeld (Display) elektronisch angezeigt werden, wobei der Nutzer vorzugsweise durch Anklicken eines Punktes auf der Karte bewirken kann, dass die entsprechende Standortangabe eingelesen wird.

Eine vorteilhafte Ausführungsform des erfindungsgemäßen Verfahrens umfasst einen Schritt des Feststellens, dass der Zeitpunkt des Einlesens der ersten (bzw. zweiten) Daten in ein Zeitintervall vorgegebener Länge (z.B. 12 oder 24 Stunden) ab der ersten (bzw. zweiten) Zeitangabe fällt.

Dies ist vorteilhaft, weil die Wahrscheinlichkeit, dass eine zweite Person ebenfalls erst längere Zeit nach einer Begegnung einen Kontaktwunsch signalisiert, sehr klein ist. Durch die zeitliche Begrenzung kann also auf eine unnötige Speicherung der zugehörigen Datenstrukturen verzichtet werden.

In einer Ausführungsform der Erfindung kann ein Nutzer die Länge des Zeitraumes nach der ersten (zweiten) Zeitangabe vorgeben, innerhalb dessen die ersten (zweiten) Daten einzugeben sind. Auf diese Weise wird die Anwenderfreundlichkeit des Verfahrens verbessert.

Das erfindungsgemäße Verfahren umfasst ferner ein von einem Netzwerkserver automatisch ausgeführtes Auswählen des ersten und des zweiten Endgeräts und ein Herstellen einer Verknüpfung zwischen beiden Endgeräten. Aus der Vielzahl aller Endgeräte des Netzwerkes wählt der Netzwerkserver in diesem Schritt also ein Paar aus, nämlich das aus den genannten ersten und zweiten Endgeräten bestehende Paar.

Auf diese Weise wird die technische Voraussetzung für einen Kontakt der zugehörigen Anwender geschaffen, ohne dass auch nur einer der Anwender die entsprechenden Kontaktdaten (wie Telefonnummer oder E-Mailadresse) des anderen wissen muss. Die Auswahl erfolgt automatisch auf Grundlage der in der ersten und zweiten Datenstruktur enthaltenen Informationen. Sie wird nach dem Kriterium getroffen, dass die Datenstrukturen eine reale Situation reflektieren: nämlich die, dass die Nutzer der jeweils ausgewählten Endgeräte einander begegnet sind und insbesondere beide an einem Kontakt interessiert sind.

Die bekannten Verfahren und Systeme hingegen schließen nicht die Möglichkeit ein, dass ein Anwender auf technischem Wege gezielt den Kontakt zu einer bestimmten Person herstellen will, der er tatsächlich begegnet ist, deren technische Kontaktdaten er aber nicht kennt.

Die Anwender des erfindungsgemäßen Verfahrens müssen sich dabei nicht als Teil einer großen Netzwerkgemeinschaft (sog. Community) einer Suche nach bestimmten Eigenschaften und Kriterien (Alter, Grösse, Familienstand, etc.) unterwerfen. Das Verfahren erlaubt es nicht, User ausschließlich über ihren Profilnamen oder andere im Profil angegebene Kriterien zu suchen. Die gegenseitig an der Kontaktaufnahme interessierten Anwender schaffen vielmehr über die Definition von Ort- und Zeitangaben zusammen mit den eigenen Kriterien und denen der gesuchten Person ein individuelles und diskretes Verfahren, um eine Verknüpfung zu der gesuchten Person herzustellen. Insbesondere erlaubt es das erfindungsgemäße Verfahren auch, eine versäumte persönliche Kontaktaufnahme zu einem späteren Zeitpunkt nachzuholen. Solche in der Praxis irreversiblen Ereignisse können durch Einsatz technischer Mittel gemäß vorliegender Erfindung zu nachholbaren Ereignissen gemacht werden.

Der erfindungsgemäße Schritt des Auswählens umfasst ein Feststellen, dass die in erster und zweiter Datenstruktur erfassten Standort- und Zeitangaben jeweils einen vorgegebenen Abstand nicht überschreiten. Damit wird sichergestellt, dass erste und zweite Datenstruktur tatsächlich eine persönliche Begegnung der zugehörigen Nutzer der Endgeräte reflektieren können. Mit diesem Schritt wird also eine erste Stufe der Sicherheitsanforderungen erfüllt, bevor eine Verknüpfung zwischen beiden Endgeräten hergestellt wird.

Das erfindungsgemäße Verfahren umfasst weiterhin ein Einlesen dritter Daten in die erste Datenstruktur, vorzugsweise zudem ein Einlesen vierter Daten in die zweite Datenstruktur. Es wird festgestellt, dass die eingelesenen dritten (ggf. auch vierten) Daten innerhalb eines vorgegebenen ersten (zweiten) Zeitraums ab dem ersten (zweiten) Zeitpunkt eingelesen werden oder wurden. Die dritten (vierten) Daten werden somit nach oder frühestens zu dem Zeitpunkt der Begegnung eingelesen.

Der erste und/oder zweite Zeitraum kann beispielsweise eine halbe, eine, zwei, 12 oder 24 Stunden umfassen.

Soweit nicht anders angegeben, stellt im Rahmen dieser Anmeldung der sogenannte erste Zeitraum den Zeitraum zwischen Begegnung der Person A mit der Person B zum ersten Zeitpunkt und dem Eingeben der dritten Daten durch Person A dar. Entsprechend stellt der zweite Zeitraum den Zeitraum zwischen zweitem Zeitpunkt (Person B) und der Eingabe der vierten Daten durch diese Person B dar. Der dritte Zeitraum stellt den Zeitraum zwischen Begegnung und Einlesen der ersten Daten (für Person A) dar, während der vierte Zeitraum den Zeitraum zwischen Begegnung und Einlesen der zweiten Daten (für Person B) darstellt.

Das erfindungsgemäße Verfahren des Auswählens von Standort-und Zeitangabe wird automatisch mit einem vorgegebenen Abstand erstellt. Sowohl Zeit- als auch Standortabstand können vorzugsweise aber durch den User überschrieben werden. Dies ermöglicht die manuelle Vergrösserung des Zeitabstandes bei nicht eindeutigen Zeitpunkten, z.B. einer längeren Begegnung in Form eines Gesprächs bzw. die manuelle Vergrösserung des Standortabstandes bei nicht eindeutigen Standorten, z.B. wenn die Personen während der Begegnung im Auto unterwegs waren (beispielsweise nebeneinander hergefahren sind).

Die genannte Feststellung der Eingabezeit realisiert eine zweite Sicherheitsstufe, weil damit die Wahrscheinlichkeit klein gehalten wird, dass ein Anwender mit voreingestellten Suchkriterien ein Interesse aufgrund einer persönlichen Begegnung simuliert. Das Verfahren ist statt dessen dazu geeignet, dass ein Nutzer in Form der dritten bzw. vierten Daten Informationen eingibt, die er erst durch eine persönliche Begegnung mit der Person gewonnen hat, mit der er in Kontakt treten möchte. Beispielsweise können die dritten (vierten) Daten Informationen zum äußeren Erscheinungsbild der jeweils anderen Person enthalten, wie eines oder mehrere der Merkmale Geschlecht, Haarfarbe oder -länge, das Vorhandensein einer Brille, Art oder Typ eines bei der Begegnung verwendeten Fahrzeugs, Kleidungsstücks und/oder Ähnliches.

Solche Informationen sind als Bestandteile eines Profils eines Nutzers (vorab und/oder instantan von diesem) hinterlegt. Der Netzwerkserver kann auf die entsprechenden Angaben in einem Profil zugreifen.

Insbesondere besteht auch die Möglichkeit, dass die Personen sich nicht nur begegnet sind, sondern sich auch unterhalten haben. Dabei können sie eine charakteristische Passphrase zur Begegnung austauschen, die ebenfalls als dritte bzw. vierte Daten eingelesen werden kann. Zum Beispiel nennen die Beiden das Wort "Kaffee" als Kriterium für diese Anwendung, weil Sie sich beim Kaffee holen getroffen haben, ohne dabei andere Kontaktdaten ausgetauscht zu haben.

Bei diesem Fall der Anwendung werden für die Verknüpfung zweier Datenstrukturen neben der Passphrase nur die ersten und zweiten Daten verwendet mit einem vom System erstellten maximalen Abstand der Zeitunkte und Standorte.

Die mit den dritten (bzw. vierten) Daten vervollständigte Datenstruktur wird gemäß dem erfindungsgemäßen Verfahren an den Netzwerkserver übermittelt. Dieser stellt dann fest, dass die dritten (vierten) Daten Angaben aus einem Profil entsprechen, das dem zweiten (ersten) Endgerät zugeordnet ist.

Der Netzwerkserver gleicht also die dritten Daten automatisch mit dem Profil des zweiten Nutzers und ggf. die vierten Daten mit dem Profil des ersten Nutzers ab und stellt kreuzweise Übereinstimmungen fest.

Die verschiedenen genannten Schritte des Feststellens erhöhen die Wahrscheinlichkeit, dass die reinen Daten, die der Netzwerkserver in Form der ersten und zweiten Datenstruktur empfängt, auf einem Zusammentreffen der Nutzer als realer Ausgangssituation beruhen, und dass diese Begegnung ein beiderseitiges Interesse an einer Kontaktaufnahme ausgelöst hat.

Eine zunächst rein zwischenmenschliche Begegnung wird also in Datenstrukturen übertragen. Umgekehrt wird durch automatische Überprüfungen empfangener Daten in dem Netzwerkserver annähernd sichergestellt, dass vom Netzwerkserver empfangene Datenstrukturen tatsächlich eine vorgesehene reale Entsprechung haben. Beide Nutzer können dann davon ausgehen, dass eine Verbindung zwischen ihnen nur hergestellt wird, wenn sie beide daran Interesse haben und auch aufgrund einer persönlichen Begegnung bereits einen ersten Eindruck voneinander haben. Dadurch wird die Gefahr eines Datenmissbrauchs klein gehalten und damit ein hohes Maß an Datenschutz gewährleistet.

Das Verfahren kann eine Erzeugung der ersten bzw. zweiten Datenstruktur im ersten bzw. zweiten Endgerät umfassen. Alternativ kann eine Blankoversion der ersten bzw. zweiten Datenstruktur im jeweiligen Endgerät gespeichert vorliegen und dann auf Initiative des Nutzers mit den ersten (zweiten) Daten konkretisiert werden. Gemäß einer Ausführungsform des erfindungsgemäßen Verfahrens wird die erste Datenstruktur in dem ersten Endgerät gespeichert, und zwar vorzugsweise nach dem Einlesen der ersten Daten. Ein Nutzer des ersten Endgeräts kann dann später auf die gespeicherte erste Datenstruktur zurückgreifen, um die dritten Daten einzugeben.

Die lokale Speicherung im ersten (zweiten) Endgerät erlaubt es, die erste (zweite) Datenstruktur erst bei deren Vervollständigung durch die dritten (vierten) Daten an einen Netzwerkserver zu übermitteln. So kann eine Serverüberlastung infolge einer Vielzahl unvollendeter Datenstrukturen der diversen Netzwerkteilnehmer vermieden werden.

Bevorzugter Weise hat ein Nutzer des zweiten (ersten) Endgeräts in dem zweiten (ersten) Profil Angaben über sich selbst hinterlegt, die eine andere Person bei einer Begegnung wahrnehmen kann. Entsprechend den oben genannten Beispielen können also eines oder mehrere der Merkmale: Geschlecht, Haarfarbe oder -länge, Charakteristika von Kleidungsstücken, das Vorhandensein einer Brille, Art oder Typ eines bei der Begegnung verwendeten Fahrzeugs und/oder Ähnliches in dem jeweiligen Profil gespeichert sein.

Ein Profil kann jeweils in dem Endgerät gespeichert sein, dem es zugeordnet ist. Alternativ kann es in einem Netzwerkserver gespeichert sein. Dieser kann derselbe sein, an den auch die erste und zweite Datenstruktur übermittelt wird. Alternativ kann das erste und/oder zweite Profil aber auch in einem anderen Netzwerkserver gespeichert sein als der, an den die erste und zweite Datenstruktur übermittelt werden und an den in diesem Fall auch das erste und/oder zweite Profil übermittelt werden/wird.

Das erfindungsgemäße Verfahren kann auch das Erzeugen eines zweiten und/oder ersten Profils umfassen. Dabei ist es günstig, wenn dem Nutzer des Endgeräts, dem das jeweilige Profil zugeordnet ist, ein Schema bereitgestellt wird, beispielsweise als Formular in einer graphischen Benutzeroberfläche. Damit kann dem Nutzer angezeigt werden, zu welchen Punkten seines Äußeren er Angaben machen kann oder sollte.

Ähnlich kann das Verfahren ein Bereitstellen eines Schemas am ersten und/oder zweiten Endgerät umfassen mit dem die dritten bzw. vierten Daten eingegeben werden können. Auch dieses Schema kann beispielsweise in Form eines Formulars in einer graphischen Benutzeroberfläche bereitgestellt werden.

In beiden Fällen kann ein solches Formular einem Nutzer bestimmte Angaben zur Auswahl vorgeben. Ein damit erzeugtes, dem zweiten (ersten) Endgerät zugeordnetes Profil und/oder damit eingelesene dritte (vierte) Daten können besonders gut automatisch vom Netzwerkserver verglichen werden.

Vorteilhaft ist eine Ausführungsform, bei der sowohl zur Profilerstellung als auch zum Einlesen der dritten bzw. vierten Daten Schemata der genannten Art bereitgestellt werden, wobei diese Schemata vorzugsweise aufeinander abgestimmt sind. Auf diese Weise kann gewährleistet werden, dass die dritten Daten auch wirklich Merkmale betreffen, zu denen im dem zweiten Endgerät zugeordneten Profil Angaben gemacht werden; Analoges gilt für die vierten Daten und das dem ersten Endgerät zugeordnete Profil. Dies erhöht die Wahrscheinlichkeit, dass festgestellt werden kann, dass die dritten Daten mit dem Profil zum zweiten Endgerät (bzw. die vierten Daten mit dem Profil zum ersten Endgerät) korrespondieren.

Ein Nutzer des ersten Endgeräts kann also, wenn er im Alltag den Nutzer des zweiten Endgeräts trifft, solche Merkmale erkennen und in Form der dritten Daten in die erste Datenstruktur eingeben. Analoges gilt für einen Nutzer des zweiten Endgeräts und die vierten Daten.

Die erfindungsgemäße Herstellung einer Verknüpfung zwischen erstem und zweitem Endgerät kann einen oder mehrere Schritte der Benachrichtigung der jeweiligen Nutzer des ersten und zweiten Endgeräts umfassen. Beispielsweise kann an beide Endgeräte je eine Nachricht gesendet werden, in der mitgeteilt wird, dass eine Kommunikationsverbindung hergestellt werden kann. Die Nachricht kann eine Abfrage enthalten, ob die Verbindung immer noch gewünscht ist.

Alternativ oder zusätzlich können wechselseitig Informationen über den jeweils anderen Nutzer und/oder ein Foto desselben an die ausgewählten Endgeräte gesandt werden. Foto und/oder sonstige Information können zuvor vom jeweiligen Nutzer in oder mit seinem Profil hinterlegt worden sein. Jeder Nutzer kann daraufhin abgefragt werden, ob sein Interesse an einer Kontaktaufnahme weiterhin besteht. Auf diese Weise kann eine zusätzliche Stufe des Datenschutzes realisiert werden.

Die Herstellung der Verknüpfung kann auch ein Senden von Kontaktinformationen an eines oder beide Endgeräte umfassen. So können eine Telefonnummer des jeweils anderen Endgeräts oder eine E-Mailadresse an die Endgeräte geschickt werden. Alternativ oder zusätzlich kann den beiden ausgewählten Nutzern die Möglichkeit angeboten werden, mit einem einfachen Bestätigungsklick zu einem anderen Netzwerkdienst oder einer Kommunikationsplattform wie Facebook oder einem E-Mail Account zu wechseln, um dort zu kommunizieren. Schließlich kann die Herstellung der Verknüpfung beider Endgeräte einen Aufbau einer Telekommunikationsverbindung wie z.B. einer Telefon- oder Chatverbindung umfassen. Zum Schutz der beiden Nutzer kann dies ohne eine automatische Weitergabe der Kontaktdaten (wie Telefonnummer oder elektronischer Adresse) an den jeweils anderen Nutzer geschehen. Die Nutzer können dann selbst entscheiden, ob sie an einem erneuten Kontakt interessiert sind und ihre entsprechenden Daten dem jeweils anderen mitteilen möchten. Bevorzugterweise kann jeder Nutzer eines Endgeräts auswählen, wie ein Kontakt bei Herstellung einer Verknüpfung realisiert werden soll. Dazu kann dem Nutzer eine Abfrage in Form einer graphischen Nutzeroberfläche präsentiert werden, bei der der Nutzer unter den verschiedenen Möglichkeiten der Kontaktherstellung eine oder mehrere gewünschte auswählen kann.

Bevorzugterweise erhält der Nutzer nach der Verknüpfung seiner Datenstruktur mit der Datenstruktur eines anderen Nutzers die Möglichkeit, diese aufgrund der bekannten Daten und/oder aufgrund des Profilbilds des anderen Nutzers manuell zu bestätigen. Dadurch werden insbesondere keine Verknüpfungen mit weiteren Nutzern auf Basis seiner Datenstruktur hergestellt bzw. bestehende Verknüpfungen werden gelöscht.

In einer bevorzugten Ausführungsform kann dieser Vorgang für den Nutzer auch reversibel gestaltet werden.

In einer bevorzugten Ausführungsform löscht der Netzwerkserver, an den die erste und/oder zweite Datenstruktur übermittelt wurde, diese nach einer gewissen Zeit (z.B. 12 oder 24 Stunden nach der Übermittlung) oder auch nach dem Herstellen der Verknüpfung wieder. Auf diese Weise wird die Serverbelastung klein gehalten.

Dem Schritt des Auswählens des ersten und zweiten Endgeräts kann eine nähere Spezifizierung der ersten und/oder zweiten Daten durch einen Nutzer des ersten bzw. zweiten Endgeräts vorausgehen. Alternativ oder zusätzlich kann kann das Verfahren einen Schritt des Änderns des vorgegebenen maximalen Abstands der in den ersten und zweiten Daten enthaltenen Standorte und/oder des maximalen Zeitabstands der in den ersten und zweiten Daten enthaltenen Zeitangaben enthalten. Dies ist vorteilhaft, wenn ein Vergleich der ersten und zweiten Datenstruktur keine eindeutige Zuordnung erlaubt, wenn also der Netzwerkserver beispielsweise mehrere mögliche zweite Endgeräte zu einem ersten Endgerät findet. Die Spezifizierung oder Änderung kann durch eine vom Netzwerkserver an das jeweilige Endgerät gesendete Aufforderung veranlasst werden.

Wie aus den obigen Ausführungen ersichtlich ist, werden mit den erfindungsgemäßen Verfahren charakteristische Merkmale einer persönlichen Begegnung in elektronische Daten übertragen. Diese Daten werden dann für die Herstellung einer Netzwerkverbindung ausgewertet. Ein Kontakt der betreffenden Personen über die Endgeräte in dem Netzwerk wird ermöglicht, wenn Anforderungen an den Schutz der Privatsphäre beider Personen gewährleistet sind. So wird das an sich irreversible Versäumnis einer Kontaktaufnahme bei einer Begegnung mit einer unbekannten Person über eine gewisse Zeitspanne zu einem, das behoben werden kann.

Eine Ausführungsform kann auch sein, dass Anwender mit einander in Kontakt treten können, wenn der erste und zweiten Datensatz übereinstimmen, aber nur Teile des dritten und des vierten Datensatzes übereinstimmen. Eine Person A (sog. Scanner) liest in einen ersten Datensatz dauerhaft die eigenen Ort- und Zeitdaten ein und hat somit ein zeitlich definiertes Ortsprofil. Im dritten Datensatz werden automatisch die bekannten Profilkriterien der eigenen Person (A) hinterlegt. Person B hat Person A gesehen und möchte den Kontakt herstellen, aber Person A hat dies nicht zur Kenntnis genommen, kann deshalb keine weiteren Informationen zur Situation in den dritten Datensatz einlesen. Der Kontakt wird trotzdem hergestellt, wenn beide Personen für diesen Fall der Anwendung bei Eingabe des ersten und des zweiten Datensatzes die Auswahl getroffen haben, die Verknüpfung mit Personen auch mit diesen reduzierten Kriterien zu akzeptieren. So sieht Person A alle Kontakte für das zurückgelegte Array (Wegprofil), welche den Kontakt wünschen einschließlich Person B.

Die Person A kann zu Beginn der Aufzeichnung des zeitlich definierten Ortsprofils die Auswahl treffen, automatisch für alle verknüpften Personen sichtbar zu sein oder aber erst nach einer manuellen Bestätigung für eine bestimmte verknüpfte Person (Person B) sichtbar zu werden. Die vom Netzwerk automatisch vorgenommene Verknüpfung muss im letzteren Fall also manuell bestätigt werden, damit tatsächlich ein Kontakt zustande kommt.

Ein Nutzer kann zu jedem Zeitpunkt einen anderen Nutzer, der ihm vom Netzwerkserver zur Auswahl angeboten wird, bzw. zu der bereits eine Verknüpfung besteht, vom Verfahren ausschließen. Dies hat zur Folge, dass weder eine Kontaktaufnahme noch eine zukünftige Auswahl dieses Nutzers durch den anderen Nutzer über den Netzwerkserver möglich ist. Das Ausschließen ist eine einseitige Aktion, jederzeit reversibel und bedarf nicht der Zustimmung des auszuschließenden Nutzers.

Die beschriebenen Verfahren können jeweils durch ein oder mehrere Computerprogramm(e) implementiert werden. Ein Ausführen solch eines Computerprogramms hat dann eine Durchführung des entsprechenden Verfahrens zur Folge. Der ausführende Computer bzw. die ausführenden Computer ist bzw. sind dabei vorzugsweise mit dem beschriebenen Netzwerk verbunden oder Teil dieses Netzwerks.

Die genannten Verfahren können in Form von computerlesbaren Instruktionen in einem oder mehreren computerlesbaren Medien gespeichert sein.

### Figurenbeschreibung

Die Erfindung ist beispielhaft schematisch in den Figuren gezeigt:
- Figur 1: illustriert ein Netzwerk und eine Abfolge von Ereignissen, bei denen das erfindungsgemäße Verfahren Anwendung findet; und
- Figur 2: verdeutlicht den Aufbau und den Abgleich zweier Datenstrukturen.

### Anwendungsbeispiel 1:

Eine Frau (Person A) fährt auf einem Fahrrad die Strasse entlang und ein Mann (Person B) ist auf der Strasse in einem Auto unterwegs. An der Kreuzung müssen beide anhalten und es werden intensive Blickkontakte ausgetauscht. Beide Personen sind an einander interessiert und würden sich gerne kennen lernen.

Die Frau nimmt ihr Smartphone (2), startet eine das erfindungsgemäße Verfahren implementierende Anwendung und löst das automatische Einlesen (4) der ersten Daten (A1) in eine Datenstruktur (A2) ein. Anschliessend steckt sie das Smartphone wieder ein.

Der Mann nimmt ebenfalls sein Smartphone (3), startet die Anwendung und löst in der Anwendung das automatische Einlesen (5) der zweiten Daten (B1) in Form einer Orts- und Zeitangabe aus. Anschließend werden die optisch festgestellten Kriterien der Situation in Form der vierten Datensätze eingelesen (7), nämlich die eingegebene Haarfarbe und Haarlänge (20), ein Fahrrad (22) als Fortbewegungsmittel der Frau sowie sein eigenes Fortbewegungsmittel (23) zusammen mit seiner Haarfarbe und -länge (21), die automatisch über seine Profildaten eingelesen werden. Die Summe seiner Datensätze werden als Datenstruktur B2 gespeichert, die nach der vollständigen Eingabe über eine mobile Datenverbindung (9) in einer Datenbank (11) abgelegt werden.

Die Frau nutzt erst eine passende Gelegenheit später, beispielsweise innerhalb von 24 Stunden, um die dritten Datensätze einzulesen in Form der Haarfarbe und -länge (15) des Mannes, ein Auto (17) als Fortbewegungsmittel des Mannes sowie ein Fahrrad als ihr eigenes Fortbewegungsmittel (16) zusammen mit ihrer Haarfarbe und -länge (14), die automatisch über ihre Profildaten eingelesen werden. Die Summe dieser Daten werden als Datenstruktur A2 gespeichert, die nach Ihrer vollständigen Eingabe über eine mobile Datenverbindung (8) in die Datenbank (11) eingespielt werden.

### Anwendungsbeispiel 2:

Eine Frau (Person A) möchte mit dem Fahrrad durch die Stadt fahren. Vor Fahrtbeginn startet Sie die Anwendung auf dem Smartphone als "Scan-Mode" und es wird ab diesem Zeitpunkt dauerhaft ein Zeit-/ Standort Array abgespeichert. Ihre Haarfarbe und -länge werden automatisch in eine dritte Datenstruktur eingelesen. Die Frau fährt nun auf ihrem Fahrrad die Strasse entlang und ein Mann (Person B) ist auf der Strasse in einem Auto unterwegs. An der Kreuzung müssen beide anhalten. Der Mann sieht die Frau (7), findet sie attraktiv und möchte sie gerne kennen lernen.

Der Mann nimmt sein Smartphone, startet die Anwendung und löst in der Anwendung das automatische Einlesen (5) der zweiten Daten (B1) in Form einer Orts- und Zeitangabe aus. Da er gesehen hat, dass die Frau ihn nicht bemerkt hat, wählt er beim Einlesen des zweiten Datensatzes die Möglichkeit aus, auch eine Verknüpfung zu Personen im "Scan-Mode" zu erhalten, also dass eine Verknüpfung hergestellt wird, auch wenn die Frau seine Profildaten und Daten zur Situation nicht einliest. Anschließend liest er die vierten Daten ein, auf Basis der optisch festgestellten Kriterien der Situation (7), nämlich die Haarfarbe und Haarlänge der Frau und ein Fahrrad als Fortbewegungsmittel der Frau. Die seinem Gerät zugeordneten Daten werden in einer Datenstruktur (B2) gespeichert, die nach Ihrer vollständigen Eingabe über eine mobile Datenverbindung (9) in einer Datenbank (11) abgelegt werden.

Nachdem die Frau mit dem Fahrrad wieder zu Hause angekommen ist, stoppt sie die Anwendung. Die ihrem Gerät zugeordneten Daten werden als Array in Datenstruktur A2 gespeichert, die über eine mobile Datenverbindung (8) in die Datenbank (11) eingespielt werden. Sie sieht nun eine Verknüpfung zum Mann im Auto an der Ampel und eventuell weitere Personen, die mit Ihrem Array verknüpft wurden. Da die Frau zu Beginn der Aufzeichnung die Auswahl getroffen hat, dass Sie nicht automatisch für alle verknüpften Personen sichtbar ist, wird sie erst nach einer manuellen Bestätigung für den Mann sichtbar. Andernfalls würde Sie automatisch für alle Personen unmittelbar nach deren Verknüpfung sichtbar. Bei Interesse kann Sie nun mit diesen Personen Kontakt aufnehmen.

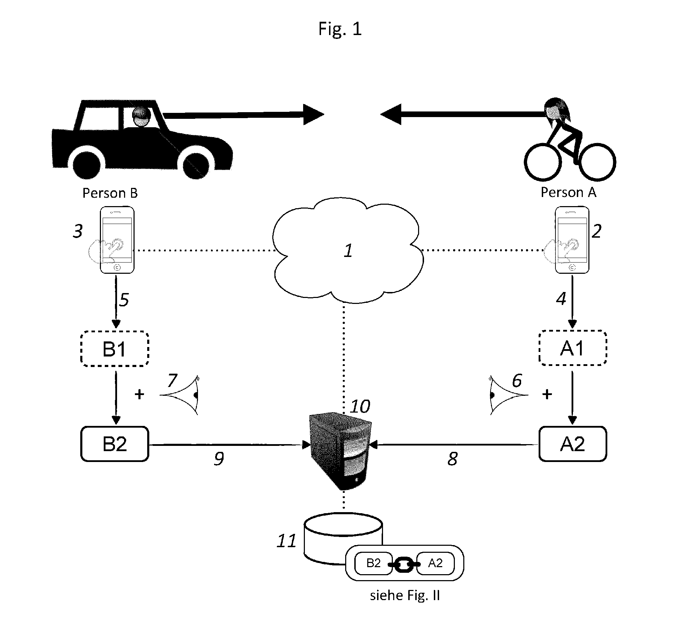

Figur 1 beschreibt, für welche Situationen die Anwendung geeignet ist und wie die Daten eingelesen werden.

Es handelt sich hierbei um die Begegnung zweier Personen, einer Frau (A) und einem Mann (B), die sich nach einer Begegnung gerne kennen lernen möchten.

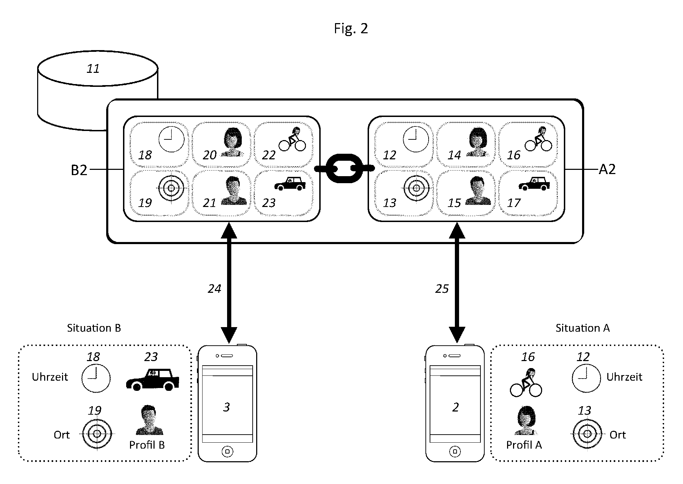

Neben den Kriterien zu den optischen Kriterien zur Person und den Fortbewegungsmitteln, sind Smartphones (2, 3) als Anwendungsbeispiele für mögliche Eingabegeräte dargestellt, die über mobile Datenverbindung eines Netzwerks (1) miteinander und mit dem Datenserver 10 kommunizieren. Der Prozess des automatischen Einlesens bzw. Speicherns (4, 5) der ersten und zweiten Datensätze (A1, B1) sowie die manuelle Ergänzung der optisch durch die Anwender erfassten Kriterien (6, 7) führen zu den für die Verknüpfung notwendigen vervollständigten Datenstrukturen A2 und B2, die über den Server (10) an die zentrale Datenbank (11) übermittelt werden. Der genaue Prozess der Verknüpfung von Datenstrukturen ist in Fig. 2 dargestellt.

Figur 2 beschreibt, unter welcher Bedingung zwei Datenstrukturen (A2, B2), die von unterschiedlichen Endgeräten (2, 3) erzeugt wurden, verknüpft werden.

Jede Datenstruktur enthält die in Fig. 1 eingelesenen Informationen:
- Eine Zeitangabe, die den Zeitpunkt (12, 18) einer Begegnung zweier Personen (Profil A, Profil B) darstellt
- Eine Standortinformation, welche die geographische Position zum Zeitpunkt einer Begegnung darstellt (13, 19)
- Daten, welche Situation (Fortbewegungsmittel) (16, 17, 22, 23) und Aussehen (Haarlänge/farbe) (14, 15, 20, 21) der Personen beschreiben
- Optional anzugebende Unterscheidungskriterien (Brille, Kopfhörer, etc.)
- Optional anzugebende Passphrase nach einem persönlichen Gespräch

In Summe ergeben diese Informationen eindeutige, einer Situation zuordenbare Personenbeschreibungen.

Eine Verknüpfung von Datenstrukturen (A2, B2) findet dann statt, wenn deren geographische Standorte (13, 19) eine definierbare Maximaldistanz zueinander nicht überschreiten, die Zeitpunkte (12, 18) einen definierbaren Zeitabstand zueinander nicht überschreiten und die Beschreibung der gemeinsam erlebten Situation (16, 17, 22, 23) und der Personen (14, 15, 20, 21) identisch sind.

Da beide Personen (Profil A, Profil B) dieselbe Situation erlebt haben und damit die gleichen Daten an den Netzwerkserver senden (24, 25), kann dieser, durch Vergleich aller in seiner Datenbank abgelegten Datenstrukturen, die zusammenpassenden Datenstrukturen (A2, B2) herausfinden, eine Verknüpfung herstellen und beide Personen darüber informieren (24, 25).

Der Zufall ist nicht auszuschließen, dass ähnliche Suchmuster am gleichen Ort und zum gleichen Zeitpunkt stattfinden. Es kann auf diese Weise auch mehr als eine passende Datenstruktur geben. Deshalb hat der Anwender vorzugsweise auch die Möglichkeit weitere, eindeutige Filterkriterien (Brille, Kopfhörer, Handtasche etc.) in die Datenstruktur einzulesen. Diese optionalen Filterkriterien sind keine Ausschlusskriterien, sondern dienen dem Anwender als Hilfestellung, indem bei mehr als einer passenden Datenstruktur diese durch die optionalen Kriterien zusätzlich qualifiziert werden können.

Bei Angabe einer Passphrase reicht neben der Passphrase die Übereinstimmung des ersten und zweiten Datensatzes, zusammen mit vom System vorgegebenen Maximalabständen, für eine Verknüpfung aus.

### Bezugszeichenliste

- 1: Netzwerk
- 2: erstes Endgerät (Person A)
- 3: zweites Endgerät (Person B)
- 4: Einlesen von (ersten) Daten
- 5: Einlesen von (zweiten) Daten
- 6: Einlesen von (dritten) Daten
- 7: Einlesen von (vierten) Daten
- 8: mobile Datenverbindung; Datenübermittlung
- 9: mobile Datenverbindung, Datenübermittlung
- 10: Netzwerkserver
- 11: Datenbank
- 12: erster Zeitpunkt (A)
- 13: erster Standort (A)
- 14: dritte Daten
- 15: dritte Daten
- 16: dritte Daten
- 17: dritte Daten
- 18: zweiter Zeitpunkt (B)
- 19: zweiter Standort (B)
- 20: vierte Daten
- 21: vierte Daten
- 22: vierte Daten
- 23: vierte Daten
- 24: Datenübermittlung
- 25: Datenübermittlung

- A1: erste Daten
- A2: erste Datenstruktur
- B1: zweite Daten
- B2: zweite Datenstruktur

## Patentansprüche

1. Verfahren zum Herstellen einer Verknüpfung zwischen zwei Endgeräten (2, 3) in einem Netzwerk (1) das die folgenden Schritte umfasst:
ein Einlesen (4) von ersten Daten (A1) in eine erste Datenstruktur (A2), die einem ersten Endgerät (2) in dem Netzwerk zugeordnet ist,
wobei die ersten Daten eine Angabe eines ersten geographischen Standorts (13) und eine Angabe eines ersten Zeitpunkts (12) umfassen;
ein Einlesen (5) von zweiten Daten (B1) in eine zweite Datenstruktur (B2), die einem zweiten Endgerät (3) in dem Netzwerk zugeordnet ist,
wobei die zweiten Daten eine Angabe eines zweiten geographischen Standorts (19) und eine Angabe eines zweiten Zeitpunkts (18) umfassen;
ein Auswählen, durch einen Netzwerkserver (10), des ersten Endgerätes (2) und des zweiten Endgeräts (3), wobei das Auswählen des ersten und des zweiten Endgeräts umfasst:
ein Feststellen, dass der erste und der zweite geographische Standort einen Abstand voneinander haben, der eine vorgegebene Maximaldistanz nicht überschreitet; sowie
ein Feststellen, dass der erste Zeitpunkt und der zweite Zeitpunkt einen Abstand voneinander haben, der einen vorgegebenen maximalen Zeitabstand nicht überschreitet; und ein Herstellen einer Verknüpfung zwischen dem ersten und zweiten Endgerät durch den Netzwerkserver;
**gekennzeichnet durch,**
ein Einlesen (6) von dritten Daten (14, 15, 16, 17) in die erste Datenstruktur (A2),
ein Feststellen, dass die dritten Daten innerhalb eines vorgegebenen ersten Zeitraums ab dem ersten Zeitpunkt eingelesen werden oder wurden,
ein Übermitteln (8, 25) der ersten Datenstruktur mit den eingelesenen dritten Daten an den Netzwerkserver; und
ein Feststellen **durch** den Netzwerkserver, dass die dritten Daten Informationen enthalten, die Angaben in einem Profil B entsprechen, das dem zweiten Endgerät (3) zugeordnet ist;
und/oder
ein Einlesen (7) von vierten Daten (20, 21, 22, 23) in die zweite Datenstruktur (B2),
ein Feststellen, dass die vierten Daten innerhalb eines vorgegebenen zweiten Zeitraums ab dem zweiten Zeitpunkt eingelesen werden oder wurden;
ein Übermitteln (9, 24) der zweiten Datenstruktur mit den eingelesenen vierten Daten an den Netzwerkserver; und
ein Feststellen **durch** den Netzwerkserver, dass die vierten Daten Informationen enthalten, die Angaben in einem Profil A entsprechen, das dem ersten Endgerät (2) zugeordnet ist.

2. Verfahren gemäß Anspruch 1,
das ein Feststellen umfasst, dass das Einlesen der ersten Daten in die erste Datenstruktur innerhalb eines dritten vorgegebenen Zeitraums ab dem ersten Zeitpunkt geschieht,
und/oder
das ein Feststellen umfasst, dass das Einlesen der zweiten Daten in die zweiten Datenstruktur innerhalb eines vierten vorgegebenen Zeitraums ab dem zweiten Zeitpunkt geschieht.

3. Verfahren gemäß Anspruch 1 oder 2, das ferner umfasst:
ein Speichern der ersten Datenstruktur in dem ersten Endgerät
und/oder
ein Speichern der zweiten Datenstruktur in dem zweiten Endgerät.

4. Verfahren gemäß einem der vorhergehenden Ansprüche,
wobei das Herstellen einer Verknüpfung zwischen dem ersten und dem zweiten Endgerät einen oder mehrere der folgenden Schritte umfasst:
Senden je einer Benachrichtigung durch den Netzwerkserver, dass eine Kommunikationsverbindung hergestellt werden kann, an das erste und/oder das zweite Endgerät;
Senden von das zweite Endgerät betreffender Information durch den Netzwerkserver, beispielsweise eine Telefonnummer, eine E-Mailadresse oder ein Foto eines Nutzers des zweiten Endgeräts, an das erste Endgerät;
Senden von das erste Endgerät betreffender Information durch den Netzwerkserver, beispielsweise eine Telefonnummer, eine E-Mailadresse oder ein Foto eines Nutzers des ersten Endgeräts, an das zweite Endgerät;
Herstellen einer Kommunikationsverbindung zwischen erstem und zweitem Endgerät durch den Netzwerkserver, wie beispielsweise einer Telefonverbindung oder einer Verbindung für geschriebene elektronische Kurznachrichten.

5. Verfahren gemäß einem der vorhergehenden Ansprüche,
wobei das erste Profil im ersten Endgerät oder in dem Netzwerkserver gespeichert ist
und/oder
wobei das zweite Profil im zweiten Endgerät oder in dem Netzwerkserver gespeichert ist

6. Verfahren gemäß einem der vorhergehenden Ansprüche, das weiterhin umfasst:
ein Bereitstellen eines Profilschemas, beispielsweise in Form eines Formulars in einer graphischen Benutzeroberfläche, am ersten und/oder am zweiten Endgerät, mit dem ein Profil eingegeben werden kann.

7. Verfahren gemäß einem der vorhergehenden Ansprüche, das weiterhin umfasst:
ein Bereitstellen eines Schemas, beispielsweise in Form eines Formulars in einer graphischen Benutzeroberfläche, am ersten Endgerät, mit dem die dritten Daten eingegeben werden können,
und/oder
ein Bereitstellen eines Schemas, beispielsweise in Form eines Formulars in einer graphischen Benutzeroberfläche, am zweiten Endgerät, mit dem die vierten Daten eingegeben werden können.

8. Verfahren gemäß einem der vorhergehenden Ansprüche, das zusätzlich umfasst:
ein Ändern der vorgegebenen Maximaldistanz durch einen Nutzer des ersten Endgeräts oder durch einen Nutzer des zweiten Endgeräts; und/oder
ein Ändern des vorgegebenen maximalen Zeitabstands durch einen Nutzer des ersten Endgeräts oder durch einen Nutzer des zweiten Endgeräts; und/oder
ein Ändern der dritten Daten nach dem Übermitteln der ersten Datenstruktur an den Netzwerkserver sowie ein Übermitteln der geänderten ersten Datenstruktur an den Netzwerkserver; und/oder
ein Ändern der vierten Daten nach dem Übermitteln der zweiten Datenstruktur an den Netzwerkserver sowie ein Übermitteln der geänderten zweiten Datenstruktur an den Netzwerkserver.

9. Verfahren gemäß einem der vorhergehenden Ansprüche,
bei dem der vorgegebene erste Zeitraum mit Hilfe des ersten Endgeräts festgelegt wird
und/oder
bei dem der vorgegebene zweite Zeitraum mit Hilfe des zweiten Endgeräts festgelegt wird.

10. Verfahren gemäß einem der vorhergehenden Ansprüche,
bei dem der Netzwerkserver, an den die erste und/oder zweite Datenstruktur übermittelt wird, diese nach Ablauf einer vorgegebenen Zeit und/oder nach dem Herstellen einer Verknüpfung zwischen dem ersten und zweiten Endgerät löscht.

11. Verfahren gemäß einem der vorhergehenden Ansprüche, beim dem nach Anforderung eines der beiden Endgeräte eine durch den Netzwerkserver hergestellte Auswahl oder Verknüpfung der beiden Endgeräte aufgehoben und ein weiteres zukünftiges Auswählen dieser beiden Endgeräte verhindert wird.

12. Verfahren gemäß einem der vorhergehenden Ansprüche, wobei ein Endgerät (2) über einen definierten Zeitraum permanent Zeit- und Standortsdaten einliest und damit ein Array (A2) zeitlich fixierter Wegpunkte aufzeichnet.

13. Verfahren gemäß einem der vorhergehenden Ansprüche, bei dem zwei Engeräte ausgewählt werden, wenn als dritte bzw. vierte Daten eine gemeinsame Passphrase eingelesen wird.

14. Verfahren gemäss einem der vorhergehenden Ansprüche, das den Nutzern der Endgeräte erlaubt, die automatische Verknüpfung manuell zu bestätigen oder abzulehnen.

15. Computerprogramm zur Durchführung eines Verfahrens gemäß einem der Ansprüche 1 bis 14, wenn das Computerprogramm auf einem oder mehreren Computern ausgeführt wird.

16. Ein oder mehrere computerlesbare Medien, auf dem/denen Instruktionen gespeichert sind, die, wenn sie auf einem oder mehreren Computer/n abgearbeitet werden, das Verfahren gemäß einem der Ansprüche 1 bis 14 ausführen.
